# EUROPEAN PATENT SPECIFICATION

(11) **EP 1 406 812 B1**
(45) Date of publication and mention of the grant of the patent: **26.10.2005**
(21) Application number: 02749010.1
(22) Date of filing: 15.07.2002
(51) Int. Cl.: B63J 5/00, B63H 23/24

(54) **A METHOD OF DISPOSING OF GAS AND PROPULSION APPARATUS FOR A SHIP**
VERFAHREN ZUR BESEITIGUNG VON GAS UND SCHIFFSANTRIEBSVORRICHTUNG
PROCEDE D'UTILISATION DE GAZ ET APPAREIL DE PROPULSION DESTINE A UN NAVIRE

(30) Priority: 13.07.2001 GB 0117137
(43) Date of publication of application: 14.04.2004
(73) Proprietor: Dorchester Maritime Limited, Douglas, Isle of Man IM1 4RE (GB)
(72) Inventor: CLUCAS, Christopher, Onchan, Isle of Man IM3 1HX (GB)
(74) Representative: Faulkner, Thomas John
(86) International application number: PCT/GB2002/003205
(87) International publication number: WO 2003/006313

(56) References cited:
- EP-A- 0 770 544
- EP-A- 1 008 514
- EP-A- 1 022 218
- WO-A-00/68073
- FR-A- 2 677 324
- US-A- 4 417 878

## Description

This invention relates to the transportation of Liquid Natural Gas (LNG) by sea. In particular, it relates to the ships used for such transportation and the propulsion systems thereof. These ships are referred to as "LNG carriers".

Conventional LNG carriers include one or more pressure vessels, in the form of cargo tanks, in which natural gas is kept as a liquid. In order to preserve the natural gas in a liquid state, insulation is provided to maintain the LNG at a low temperature. It is necessary to maintain a temperature of approximately - 160 degrees centigrade in order to substantially prevent the LNG turning into a gas, and the pressure in the tank rising above a safe limit.

However, this insulation tends not to be wholly effective and localised boiling of the LNG invariably occurs. This leads to a "boil-off" vapour accumulating inside the tank. International shipping regulations require LNG carriers to provide means for the safe handling of this boil-off, other than simply venting it to the atmosphere. In conventional LNG carriers powered by steam turbines, the boil-off is often burned in the boilers as a supplementary fuel. Under steady-state, cruising-speed conditions at sea, this can be an effective method of preventing the build-up of boil-off in the tank. However, at lower speeds, such as when approaching port, this method is unable to deal with all the boil-off from the LNG in the tank and must be supplemented by other techniques. These include combusting the excess boil-off so as to raise excess steam which is then recondensed, and burning some or all of the boil-off in a separate incinerator. Raising excess steam is disadvantageous in that it results in corrosion of the atmospheric condenser used for this purpose. Burning the boil-off in a separate incinerator is disadvantageous in that it requires separate plant and generates large amounts of heat that may be considered a safety hazard.

LNG carriers have been proposed in which diesel-electric generator sets (gensets) are substituted for steam turbines. It has been proposed that the LNG boil-off may be burned as a supplementary fuel in the diesel engines of such gensets. However, it is submitted that these proposed carriers will not address the above-mentioned disadvantages of steam-powered LNG carriers.

EP 0 770 544 discloses a propulsion system for a gas transport ship. The propulsion system has a gas tank for storing liquid gas. Gas evaporated from the tank is burned in a diesel motor to generate electricity. The electricity in turn drives an electric motor. The electric motor drives a propeller to propel the ship. Excess energy generated by burning of the gas may be dissipated by use of a hydraulic brake.

It is an object of this invention to address these problems.

According to an aspect of this invention there is provided a method of disposing of flammable gas on a ship including the steps of:
a) combusting the gas in an engine of a generator set, the generator set supplying electricity generated at least partially thereby to propulsion means operable to propel at least two streams of water away from the ship, thereby propelling the ship, the propulsion means being further operable to vary the direction of the streams of water relative to the ship, thereby steering the ship; and
b) operating the propulsion means such that at least one of the streams of water is directed so as to at least partially oppose the action of at least one other of the streams of water.

According to another aspect of this invention there is provided propulsion apparatus for a ship carrying liquified gas, the apparatus including at least one generator set, and propulsion means, the generator set being operable to generate an electrical output from fuel combusted therein, that fuel including the gas, and the propulsion means being arranged to receive the electrical input and operable to propel at least two streams of water away from the ship, thereby propelling the ship, the propulsion means being further operable to vary the direction of the two of the streams of water relative to the ship, thereby steering the ship, wherein the propulsion means is still further operable to vary the direction of at least one of the streams of water relative to at least one other of the streams of water so as to at least partially oppose the action of the at least one other stream of water.

This is advantageous in disposing of unwanted quantities of the gas, whilst maintaining the ship at a low speed or in a substantially stationary position.

The propulsion means may be one or more electric motor units, each including an electric motor provided with and operable to rotate at least one respective propeller means and thereby to produce the at least two streams of water. The electric motor units may be mounted out-board of the ship and each propeller means may be a conventional propeller. The propulsion means may be mounted in-board of the ship so as to propel streams of water in the form of water jets from the ship.

Preferably, there are at least two propellers and each propeller is connected so as to be rotatable by a respective one of the motors. Each electric motor unit is preferably mounted out-board of the ship and includes a respective housing in which the respective motor is housed, with the respective propeller mounted for rotation thereon. Preferably each housing, together with the respective propeller, is pivotable relative to the ship such that pivotal movement of each housing relative to the ship causes the direction of the respective stream of water produced thereby to be varied with respect to the ship. Preferably each housing is pivotable about a substantially vertical axis. Such housings are sometimes referred to a "azi-pods".

Preferably the propulsion means includes control means operable to pivotally move each housing together with, and in cooperation with, each other housing such that the respective streams of water propelled therefrom are propelled in substantially the same direction. Preferably the control means is also operable to pivotally move at least one housing independently of, and in at least partial opposition to, at least one other housing, such that the stream or streams of water propelled from the at least one housing is or are propelled in a direction other than parallel to the direction of the stream or streams of water propelled from the at least one other housing.

In pivotally moving at least one housing relative to at least one other housing such that the respective streams of water propelled thereby are at least in partial opposition, the two housings may be pivotally moved such that the respective streams of water converge or such that the respective streams of water diverge. At least one housing may be pivotally moved relative to at least one other housing such that the respective streams of water propelled therefrom are opposed, thereby producing substantially no overall propulsion and maintaining the ship in a substantially stationary position.

The ship may be a ship for carrying Liquified Natural Gas (LNG). The gas may be LNG that is being carried by the ship, in gaseous form. The gas may be "boil off" gas from the LNG that is being carried by the ship.

The or each generator set may include at least one respective engine and at least one respective generator. Preferably the or each engine is an engine that operates on the diesel cycle. The or each engine is preferably operable to combust both a conventional diesel fuel, such as a heavy fuel oil, and the LNG "boil-off".

A specific embodiment of this invention is now described by way of example only and with reference to the accompanying drawings, in which:
Figure 1 is a schematic diagram of propulsion apparatus for a ship;
Figure 2 is a plan view of part of the propulsion apparatus in one arrangement during a second mode of operation; and
Figure 3 is a plan view of part of the propulsion apparatus in another arrangement during the second mode of operation.

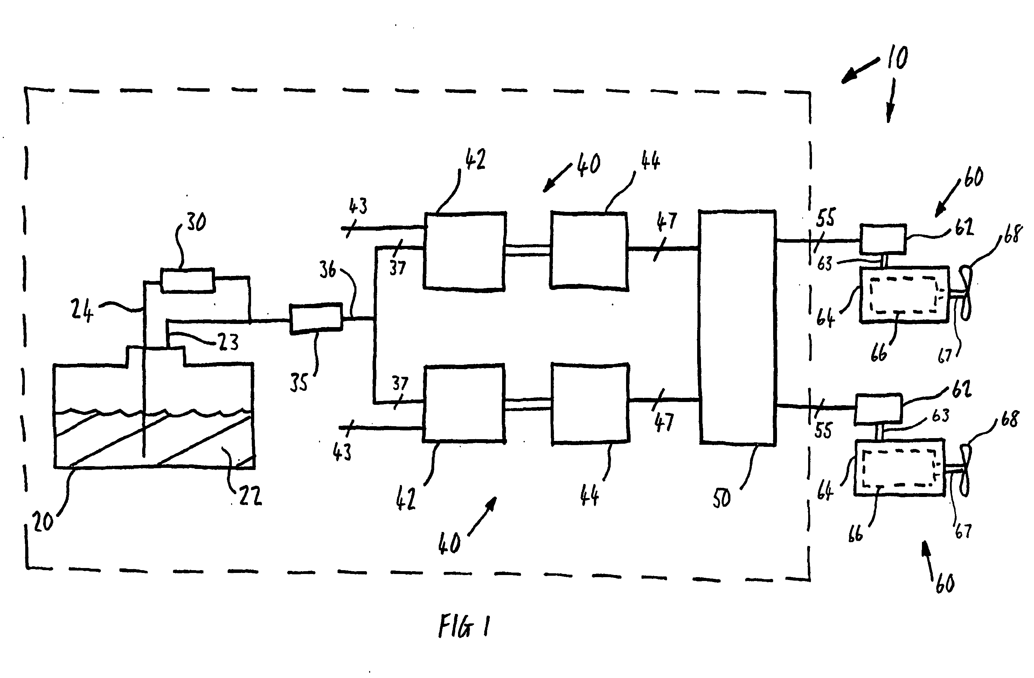

Figure 1 shows propulsion apparatus 10, for a ship. The ship is not shown, but it is of the type used to transport Liquid Natural Gas (LNG). The propulsion apparatus is a diesel-electric arrangement, including two generator sets 40, control means in the form of a controller 50 and two outboard electric motor units 60.

Each generator set 40 is substantially the same as the other and includes a respective diesel engine 42, and a respective generator 44. An output shaft of each engine 42 is connected to an input shaft of the respective generator 44. A respective primary fuel inlet manifold 43 of each diesel engine 42 is connected so as to receive fuel in the form of diesel oil from a diesel oil source, such as a tank of diesel (not shown). Electrical outputs of each of the two generators 44 are connected to electrical inputs of the controller 50 along electrical path 47.

The two outboard electric motor units 60 are substantially the same as each other. Each unit 60 includes two portions: a fixed base portion 62 and a moveable portion 64. Each moveable portion 64 is attached to the respective fixed base portion 62 by a respective shaft 63 about which the moveable portion 64 is pivotable relative to the fixed portion 62. Each moveable portion 64 includes an electric motor mounted therein 66, with an output shaft 67 thereof projecting from the respective moveable portion 64. Each output shaft 67 of each motor has a propeller 68 mounted thereon.

Both of the fixed base units 62 are mounted on the outside of the ship's hull, adjacent the stern. Inputs of the electric motor units 60 are connected to outputs of the controller 50 along a respective control line 55. Outboard electric motor units 60 such as these are sometimes referred to as "azi-pods".

The ship includes a tank 20 in which LNG 22 is held. This is the cargo of the ship. The tank 20 is substantially the same as that in conventional LNG-carrying ships, but with the addition of two tank outlet lines 23,24. A first one 23 of the tank outlet lines has an end that is situated in a top portion of the tank 20. This first tank outlet line 23 extends from the top portion of the tank 20 to an inlet side of a compressor 30. A second one 24 of the tank outlet lines has an end that is submerged in the LNG 22 held in the tank 20 so as to be adjacent a bottom of the tank 20. The second tank outlet line 24 extends from the bottom of a tank to an inlet side of a vapouriser 35, where it continues from an outlet side thereof to join with the first tank outlet line 23 at the inlet side of the compressor 30. A compressor outlet line 36 extends from an outlet side of the compressor 30 to a respective secondary fuel inlet manifold 37 of each diesel engine 42.

Operation of the propulsion apparatus 10 will be considered in two modes. In a first mode of operation, the propulsion apparatus is operated to propel the ship at a high and constant cruising speed. This would be used in open water on the high seas. In a second mode of operation, the propulsion apparatus 10 is operated to propel the ship at a lower speed. This would be used when approaching port or when docking. The second mode may also be used to maintain the ship in a substantially stationary position.

In operation under the first mode, diesel fuel oil is provided to the inlet manifold 43 of the diesel engine 42 of each generator set 40. This fuel oil is combusted in each engine 42 so as to cause the respective output shaft thereof the rotate. This in turn causes the respective input shaft of each generator 44 to rotate, resulting in a potential difference being generated across the respective electrical path 47 of each generator 44.

The controller 50 is operable to variably connect one or both of the electric motor units 60 to the electrical paths 47, so as to operate one or both of the electric motor units 60. In so doing, the controller 50 is operable to control the speed of each electric motor 66 and hence the propulsive force produced by rotation of the respective propeller 68 thereon. However, the controller 50 is also operable to control each of the electric motor units 60 such that each moveable portion 64 thereof is pivotable relative to the respective fixed base portion 62, and hence relative to the body of the ship. The moveable portions 64 may be pivoted together in this way such that each propeller 68 propels a respective stream of water in the same direction, oblique to a fore-aft axis of the ship. It will be appreciated that this tends to steer the ship.

During the first mode of operation the diesel fuel oil supplied to each engine 42 is supplemented by "boil-off " from the tank 20 of LPG 22. The boil-off tends to collect in the top portion of the tank 20. It is envisaged that the first tank outlet line 23 includes a valve (not shown) at the end thereof adjacent the top of the tank 20. The valve is opened to allow boil-off to escape from the tank 20 and pass along the first tank outlet line 23. The boil-off passes through the compressor 35 and is compressed thereby to a pressure at which it can be introduced from the secondary fuel inlet manifolds 37 of the two diesel engines 42 into combustion chambers thereof. The boil-off is then combusted in the engines 42 as a supplementary fuel to the diesel fuel oil.

It is envisaged that under the steady state, high speed, conditions of the first mode of operation, all of the gas that naturally boils-off from the LNG 22 in the tank 20 can be burned in the engines 42 in this way. This is advantageous in being an efficient use of the boil-off and being more convenient than burning it in a dedicated incinerator or using it to produce steam that is then vented to the atmosphere.

It is envisaged that, rather than being a secondary fuel source as described above, the LNG 22 in the tank 20 may be the primary fuel source. To this end, LNG may be drawn from the LNG 22 in the tank 20 through the second tank outlet line 24, for example by a suitable pump (not shown). As LNG so drawn would be in the liquid state, it would be passed through the vapouriser 30 before being combined with the natural boil-off in the first tank supply line 23 and passed through the compressor 35. In this way, as much gaseous LNG as is necessary may be taken from the tank 20 and used as fuel in the diesel engines 42. However, it is preferred that even if gaseous LNG is the primary fuel source, some diesel fuel oil should be supplied to the engines 42 to ensure optimal combustion of the LNG therein.

In operation under the slower, or stationary, second mode, the electrical power required by the electric motor units 60 is lower in comparison to the electrical power required during the first mode of operation. It will be appreciated that less fuel will therefore be required by the engines 42 in rotating the generators 44 to generate electricity at this reduced power level. Thus, in the second mode of operation, there is a tendency not to consume all the natural boil-off from the LNG 22 in the tank 20. As stated above, this is problematic.

However, in the second mode of operation, the controller 50 is operable to pivot each moveable portion 64 of the electric motor units 60 relative to the respective fixed base portion 62 so that each propeller 68 propels a respective stream of water in a direction that is oblique to, and hence at least partially opposed to, the stream of water propelled by the other propeller 68. For example, the moveable portions 64 may be pivoted relative to each other, rather than together, such that the two streams of water diverge or such that they converge.

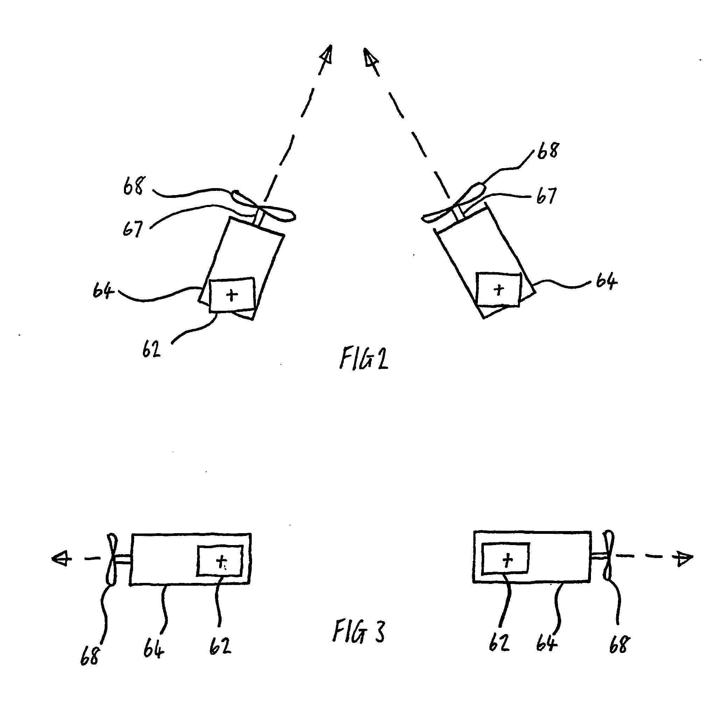

Figure 2 shows operation during the second mode in which the moveable portion 64 of each electric motor unit 60 has been pivoted towards the other electric motor unit 60. This results in the stream of water that is propelled by each propeller 68 being propelled in a direction such that it converges with the other stream of water. Thus the propulsive force generated by each propeller has a component that acts in opposition to a component of the propulsive force created by the other propeller. This results in the actions of the electric motor units 60 at least partially cancelling each other out such that the overall propulsion is less that it would have been under the first mode of operation. By operating the electric motor units 60 in this way, it is possible to propel the ship at low speed, whilst also combusting substantially all of the natural boil-off in the engines 42. The second mode of operation may thus be considered to be deliberately inefficient.

If it is desired that the ship remain substantially stationary, the electric motor units 60 may be pivoted relative to one another such that the respective streams of water produced thereby are fully opposed, be they directed towards one another or away from one another, so that their actions substantially cancel one another out. Figure 3 shows such an arrangement in which each moveable portion 64 is pivoted away from the other moveable portion 64 such that the streams of water are propelled away from one another in opposite directions.

Thus, the propulsion apparatus 10 is advantageous in preventing a build-up of boil off when the ship is being propelled at a low speed or when the ship is stationary.

Although only two generator sets 40 are shown for clarity, it is envisaged that almost any number may be provided. For example, four generator sets 40 may be provided, two of which may each include a nine-cylinder diesel engine and two of which may each include a six-cylinder engine. Not all the engines need be used all the time. Instead, some may be provided for back-up purposes or for use only for propelling the ship at its full speed.

It is envisaged that a suitable engine for combusting both diesel fuel oil and gaseous LNG and would be a diesel engine such as a Wartsila W50DF.

In an alternative embodiment that is not illustrated, the natural boil-off from the LNG cargo is preferably not combusted, but instead it is passed through re-liquefaction means and returned to the body of the LNG cargo as a liquid. However, it is envisaged that the propulsion apparatus 10 described above be provided in this alternative embodiment in order to dispose of the boil-off in the event that the re-liquefaction apparatus fails. In other words the propulsion apparatus 10 is provided as a "back-up" to the re-liquefaction apparatus.

In another alternative embodiment that is also not illustrated, some of the natural boil-off from the LNG cargo is re-liquefied using re-liquefaction apparatus and some is disposed of by means of the propulsion apparatus 10 as described above.

## Claims

1. A method of disposing of flammable gas on a ship including the steps of:
combusting the gas in an engine (42) of a generator set (40), the generator set supplying electricity generated at least partially thereby to propulsion means (60)
**characterised in that** the propulsion means (60) is operable to propel at least two streams of water away from the ship, thereby propelling the ship, the propulsion means (60) being further operable to vary the direction of the streams of water relative to the ship, thereby steering the ship; and further **characterised by** the step of
operating the propulsion means (60) such that at least one of the streams of water is directed so as to at least partially oppose the action of at least one other of the streams of water.

2. A method according to claim 1, wherein the propulsion means (60) is one or more electric motor units, each including an electric motor (66) provided with and operable to rotate at least one respective propeller means (68) and thereby to produce the at least two streams of water.

3. A method according to claim 2, wherein the electric motor units (60) are mounted out-board of the ship and each propeller means (68) is a conventional propeller.

4. A method according to claim 2, wherein the propulsion means (60) is mounted in-board of the ship so as to propel streams of water in the form of water jets from the ship.

5. A method according to claim 3, wherein there are at least two propellers (68) and each propeller (68) is connected so as to be rotatable by a respective one of the motors (66).

6. A method according to claim 3, wherein each electric motor unit (60) includes a respective housing (64) in which the respective motor (66) is housed, with the respective propeller (68) mounted for rotation thereon.

7. A method according to claim 6, wherein each housing (64), together with the respective propeller (68), is pivotable relative to the ship such that pivotal movement of each housing relative to the ship causes the direction of the respective stream of water produced thereby to be varied with respect to the ship.

8. A method according to claim 7, wherein each housing (64) is pivotable about a substantially vertical axis.

9. A method according to claim 6, claim 7 or claim 8, wherein the propulsion means (60) includes control means operable to pivotally move at least one housing (64) independently of, and in at least partial opposition to, at least one other housing (64), such that the stream or streams of water propelled from the at least one housing (64) is or are propelled in a direction other than parallel to the direction of the stream or streams of water propelled from the at least one other housing (64).

10. A method according to claim 9, wherein the two housings (64) are pivotally moved such that the respective streams of water converge or such that the respective streams of water diverge.

11. A method according to claim 10, wherein at least one housing (64) is pivotally moved relative to at least one other housing (64) such that the respective streams of water propelled therefrom are opposed, thereby producing substantially no overall propulsion and maintaining the ship in a substantially stationary position.

12. A propulsion apparatus (10) for a ship carrying liquified gas, the apparatus (10) including at least one generator set (40), and propulsion means (60), the generator set (40) being operable to generate an electrical output from fuel combusted therein, that fuel including the gas, and the propulsion means (60) being arranged to receive the electrical input
**characterised in that** the propulsion means (60) is operable to propel at least two streams of water away from the ship, thereby propelling the ship, the propulsion means (60) being further operable to vary the direction of the two of the streams of water relative to the ship, thereby steering the ship, wherein the propulsion means (60) is still further operable to vary the direction of at least one of the streams of water relative to at least one other of the streams of water so as to at least partially oppose the action of the at least one other stream of water.

13. Propulsion apparatus (10) according to claim 12, wherein the propulsion means (60) is one or more electric motor units, each including an electric motor (66) provided with and operable to rotate at least one respective propeller means (68) and thereby to produce the at least two streams of water.

14. Propulsion apparatus (10) according to claim 13, wherein the electric motor units (60) are mounted out-board of the ship and each propeller means (68) is a conventional propeller.

15. Propulsion apparatus (10) according to claim 13, wherein the propulsion means (60) is mounted in-board of the ship so as to propel streams of water in the form of water jets from the ship.

16. Propulsion apparatus (10) according to claim 14, wherein there are at least two propellers (68) and each propeller is connected so as to be rotatable by a respective one of the motors (66).

17. Propulsion apparatus (10) according to claim 14, wherein each electric motor unit (60) includes a respective housing (64) in which the respective motor (66) is housed, with the respective propeller (68) mounted for rotation thereon.

18. Propulsion apparatus (10) according to claim 17, wherein each housing (64), together with the respective propeller (68), is pivotable relative to the ship such that pivotal movement of each housing (64) relative to the ship causes the direction of the respective stream of water produced thereby to be varied with respect to the ship.

19. Propulsion apparatus (10) according to claim 18, wherein each housing (64) is pivotable about a substantially vertical axis.

20. Propulsion apparatus (10) according to claim 17, claim 18 or claim 19, wherein the propulsion means (60) includes control means operable to pivotally move at least one housing (64) independently of, and in at least partial opposition to, at least one other housing (64), such that the stream or streams of water propelled from the at least one housing (64) is or are propelled in a direction other than parallel to the direction of the stream or streams of water propelled from the at least one other housing (64).

21. Propulsion apparatus (10) according to claim 20, wherein the two housings (64) are pivotally moved such that the respective streams of water converge or such that the respective streams of water diverge.

22. Propulsion apparatus (10) according to claim 21, wherein at least one housing (64) is pivotally moved relative to at least one other housing (64) such that the respective streams of water propelled therefrom are opposed, thereby producing substantially no overall propulsion and maintaining the ship in a substantially stationary position.

23. A method or propulsion apparatus (10) according to any one of the preceding claims, wherein the ship is for carrying Liquified Natural Gas (LNG).

24. A method or propulsion apparatus (10) according to claim 23, wherein the gas is LNG that is being carried by the ship.

25. A method or propulsion apparatus (10) according to claim 24, wherein the gas is "boil off" gas from the LNG that is being carried by the ship.

26. A method or propulsion apparatus (10) according to claim 25, wherein the or each generator set (40) includes at least one engine that is operable to combust both a conventional diesel fuel and the LNG "boil-off'.

## Patentansprüche

1. Verfahren zur Beseitigung von brennbarem Gas auf einem Schiff, wobei das Verfahren folgende Schritte umfaßt:
Verbrennen des Gases in einem Motor (42) eines Generatorsatzes (40), wobei der Generatorsatz mindestens teilweise darin erzeugten Strom an ein Antriebsmittel (60) liefert,
**dadurch gekennzeichnet, daß** das Antriebsmittel (60) so betrieben werden kann, daß mindestens zwei Wasserströme vom Schiff weggetrieben werden, um das Schiff anzutreiben, und daß das Antriebsmittel (60) weiterhin so betrieben werden kann, daß die Richtung der Wasserströme im Verhältnis zum Schiff verändert wird, um das Schiff zu steuern; und weiterhin durch den folgenden Schritt gekennzeichnet:
Betreiben des Antriebsmittels (60) in einer solchen weise, daß mindestens einer der Wasserströme so gelenkt wird, daß er mindestens teilweise der Wirkung von mindestens einem anderen der Wasserströme entgegenwirkt.

2. Verfahren nach Anspruch 1, bei dem es sich bei dem Antriebsmittel (60) um eine oder mehrere Elektromotoreinheiten handelt, wobei jede einen Elektromotor (66) beinhaltet, der mit mindestens einem jeweiligen Antriebsschraubenmittel (68) ausgestattet ist und so betrieben werden kann, daß dieses Antriebsschraubenmittel in Drehung versetzt wird, um dadurch die mindestens zwei Wasserströme zu erzeugen.

3. Verfahren nach Anspruch 2, bei dem die Elektromotoreinheiten (60) außenbords am Schiff montiert sind und jedes Antriebsschraubenmittel (68) eine herkömmliche Antriebsschraube ist.

4. Verfahren nach Anspruch 2, bei dem das Antriebsmittel (60) binnenbords am Schiff montiert ist, um Wasserströme in der Form von Wasserstrahlen vom Schiff wegzutreiben.

5. Verfahren nach Anspruch 3, bei dem mindestens zwei Antriebsschrauben (68) vorgesehen sind und jede Antriebsschraube (68) so angeschlossen ist, daß sie von einem jeweiligen der Motoren (66) in Drehung versetzt werden kann.

6. Verfahren nach Anspruch 3, bei dem jede Elektromotoreinheit (60) ein jeweiliges Gehäuse (64) beinhaltet, in dem der jeweilige Motor (66) untergebracht ist, wobei die jeweilige Antriebsschraube (68) zwecks Drehung daran montiert ist.

7. Verfahren nach Anspruch 6, bei dem jedes Gehäuse (64), zusammen mit der jeweiligen Antriebsschraube (68), im Verhältnis zum Schiff so schwenkbar ist, daß eine Schwenkbewegung eines jeden Gehäuses im Verhältnis zum Schiff bewirkt, daß die Richtung des dadurch erzeugten jeweiligen Wasserstroms im Verhältnis zum Schiff verändert wird.

8. Verfahren nach Anspruch 7, bei dem jedes Gehäuse (64) um eine im wesentlichen vertikale Achse schwenkbar ist.

9. Verfahren nach Anspruch 6, Anspruch 7 oder Anspruch 8, bei dem das Antriebsmittel (60) ein Steuerungsmittel beinhaltet, das so betrieben werden kann, daß mindestens ein Gehäuse (64) unabhängig von mindestens einem anderen Gehäuse (64), und in mindestens teilweise entgegenwirkender Weise, so geschwenkt werden kann, daß der Wasserstrom oder die Wasserströme, der bzw. die von dem mindestens einen Gehäuse (64) weggetrieben wird bzw. werden, in einer anderen Richtung als parallel zur Richtung des bzw. der von dem mindestens einen anderen Gehäuse (64) weggetriebenen Wasserstroms bzw. Wasserströme angetrieben wird bzw. werden.

10. Verfahren nach Anspruch 9, bei dem die zwei Gehäuse (64) so geschwenkt werden, daß die jeweiligen Wasserströme konvergieren oder daß die jeweiligen Wasserströme divergieren.

11. Verfahren nach Anspruch 10, bei dem mindestens ein Gehäuse (64) im Verhältnis zu mindestens einem anderen Gehäuse (64) so geschwenkt wird, daß die davon weggetriebenen jeweiligen Wasserströme in entgegenwirkender Weise strömen, wodurch im wesentlichen kein Gesamtantrieb erfolgt und das Schiff in einer im wesentlichen stationären Position verbleibt.

12. Antriebsvorrichtung (10) für ein Flüssiggas transportierendes Schiff, wobei die Vorrichtung (10) mindestens einen Generatorsatz (40) sowie ein Antriebsmittel (60) beinhaltet, wobei der Generatorsatz (40) so betrieben werden kann, daß durch darin verbrannten Kraftstoff ein elektrischer Ausgang erzeugt werden kann, wobei dieser Kraftstoff das Gas beinhaltet, und daß das Antriebsmittel (60) so vorgesehen ist, daß es den elektrischen Eingang empfängt,
**dadurch gekennzeichnet, daß** das Antriebsmittel (60) so betrieben werden kann, daß mindestens zwei Wasserströme vom Schiff weggetrieben werden, um das Schiff anzutreiben, wobei das Antriebsmittel (60) weiterhin so betrieben werden kann, daß die Richtung der beiden Wasserströme im Verhältnis zum Schiff verändert wird, um das Schiff zu steuern, wobei das Antriebsmittel (60) noch weiterhin so betrieben werden kann, daß die Richtung von mindestens einem der Wasserströme im Verhältnis zu mindestens einem anderen der Wasserströme verändert wird, um so mindestens teilweise der Wirkung des mindestens einen anderen Wasserstroms entgegenzuwirken.

13. Antriebsvorrichtung (10) nach Anspruch 12, bei der es sich bei dem Antriebsmittel (60) um einen oder mehrere Elektromotoreinheiten handelt, wobei jede einen Elektromotor (66) beinhaltet, der mit mindestens einem jeweiligen Antriebsschraubenmittel (68) ausgestattet ist, um dieses Antriebsschraubenmittel in Drehung zu versetzen und dadurch die mindestens zwei Wasserströme zu erzeugen.

14. Antriebsvorrichtung (10) nach Anspruch 13, bei der die Elektromotoreinheiten (60) außenbords am Schiff montiert sind und jedes Antriebsschraubenmittel (68) eine herkömmliche Antriebsschraube ist.

15. Antriebsvorrichtung (10) nach Anspruch 13, bei der das Antriebsmittel (60) binnenbords auf dem Schiff montiert ist, um Wasserströme in der Form von Wasserstrahlen vom Schiff wegzutreiben.

16. Antriebsvorrichtung (10) nach Anspruch 14, bei der mindestens zwei Antriebsschrauben (68) vorgesehen sind und jede Antriebsschraube so angeschlossen ist, daß sie von einem jeweiligen der Motoren (66) in Drehung versetzt werden kann.

17. Antriebsvorrichtung (10) nach Anspruch 14, bei der jede Elektromotoreinheit (60) ein jeweiliges Gehäuse (64) beinhaltet, in dem der jeweilige Motor (66) untergebracht ist, wobei die jeweilige Antriebsschraube (68) zwecks Drehung daran montiert ist.

18. Antriebsvorrichtung (10) nach Anspruch 17, bei der jedes Gehäuse (64), zusammen mit der jeweiligen Antriebsschraube (68), im Verhältnis zum Schiff so schwenkbar ist, daß eine Schwenkbewegung eines jeden Gehäuses (64) im Verhältnis zum Schiff bewirkt, daß die Richtung des dadurch erzeugten jeweiligen Wasserstroms im Verhältnis zum Schiff verändert wird.

19. Antriebsvorrichtung (10) nach Anspruch 18, bei der jedes Gehäuse (64) um eine im wesentlichen vertikale Achse schwenkbar ist.

20. Antriebsvorrichtung (10) nach Anspruch 17, Anspruch 18 oder Anspruch 19, bei der das Antriebsmittel (60) ein Steuerungsmittel beinhaltet, das so betrieben werden kann, daß mindestens ein Gehäuse (64) unabhängig von mindestens einem anderen Gehäuse (64), und in mindestens teilweise entgegenwirkender Weise, so geschwenkt werden kann, daß der Wasserstrom oder die Wasserströme, der bzw. die von dem mindestens einen Gehäuse (64) weggetrieben wird bzw. werden, in einer anderen Richtung als parallel zur Richtung des bzw. der von dem mindestens einen anderen Gehäuse (64) weggetriebenen Wasserstroms bzw. Wasserströme angetrieben wird bzw. werden.

21. Antriebsvorrichtung (10) nach Anspruch 20, bei der die zwei Gehäuse (64) so geschwenkt werden, daß die jeweiligen Wasserströme konvergieren oder daß die jeweiligen Wasserströme divergieren.

22. Antriebsvorrichtung (10) nach Anspruch 21, bei der mindestens ein Gehäuse (64) im Verhältnis zu mindestens einem anderen Gehäuse (64) so geschwenkt wird, daß die davon weggetriebenen jeweiligen Wasserströme in entgegenwirkender Weise strömen, wodurch im wesentlichen kein Gesamtantrieb erfolgt und das Schiff in einer im wesentlichen stationären Position verbleibt.

23. Verfahren oder Antriebsvorrichtung (10) nach einem der vorstehend aufgeführten Ansprüche, wobei das Schiff für den Transport von Flüssigerdgas (LNG) eingesetzt wird.

24. Verfahren oder Antriebsvorrichtung (10) nach Anspruch 23, wobei es sich bei dem vom Schiff transportierten Gas um LNG handelt.

25. Verfahren oder Antriebsvorrichtung (10) nach Anspruch 24, wobei es sich bei dem Gas um "Ausdampfungen" aus dem vom Schiff transportierten LNG handelt.

26. Verfahren oder Antriebsvorrichtung (10) nach Anspruch 25, wobei der oder jeder Generatorsatz (40) mindestens einen Motor beinhaltet, der betrieben werden kann, um sowohl einen herkömmlichen Dieselkraftstoff als auch die LNG-"Ausdampfungen" zu verbrennen.

## Revendications

1. Procédé d'utilisation de gaz inflammable sur un navire, comprenant les étapes de :
brûler le gaz dans un moteur (42) d'un groupe générateur (40), le groupe générateur fournissant à un moyen de propulsion (60) de l'électricité au moins en partie ainsi produite
**caractérisé en ce que** le moyen de propulsion (60) peut être utilisé pour propulser au moins deux courants d'eau dirigés à l'écart du navire, propulsant ainsi le navire, le moyen de propulsion (60) pouvant en outre être utilisé pour changer la direction des courants d'eau par rapport au navire, orientant ainsi le navire ; et **caractérisé en outre par** l'étape de
utiliser le moyen de propulsion (60) de telle sorte qu'au moins l'un des courants d'eau est dirigé de telle façon qu'il vienne s'opposer au moins partiellement avec l'action d'au moins un autre des courants d'eau.

2. Procédé selon la revendication 1, dans lequel le moyen de propulsion (60) est une ou plusieurs unités à moteur électrique, chacune comprenant un moteur électrique (66) associé à et utilisable pour entraîner en rotation au moins un moyen de propulsion respectif (68) et pour produire ainsi lesdits au moins deux courants d'eau.

3. Procédé selon la revendication 2, dans lequel les unités à moteur électrique (60) sont montées hors-bord du navire et dans lequel chaque moyen de propulsion (68) est un propulseur de type conventionnel.

4. Procédé selon la revendication 2, dans lequel le moyen de propulsion (60) est monté à bord du navire de façon à propulser des courants d'eau sous la forme de jets d'eau depuis le navire.

5. Procédé selon la revendication 3, dans lequel il y a au moins deux propulseurs (68) et dans lequel chaque propulseur (68) est relié de façon à pouvoir être mis en rotation par respectivement l'un des moteurs (66).

6. Procédé selon la revendication 3, dans lequel chaque unité à moteur électrique (60) comporte un logement respectif (64) dans lequel est logé le moteur respectif (66), sur lequel est monté le propulseur respectif (68) pour être mis en rotation.

7. Procédé selon la revendication 6, dans lequel chaque logement (64), pris avec le propulseur respectif (68), peut être pivoté par rapport au navire de telle sorte que le mouvement de pivotement de chaque logement par rapport au navire provoque un changement de la direction par rapport au navire du courant d'eau respectif ainsi produit.

8. Procédé selon la revendication 7, dans lequel chaque logement (64) peut être pivoté autour d'un axe sensiblement vertical.

9. Procédé selon la revendication 6, la revendication 7 ou la revendication 8, dans lequel le moyen de propulsion (60) comprend un moyen de commande utilisable pour déplacer en pivotement au moins un logement (64) indépendamment de, et en opposition au moins partielle avec, au moins un autre logement (64), de telle sorte que le ou les courants d'eau propulsés provenant dudit au moins un logement (64) est ou sont propulsés selon une direction autre que parallèle à la direction du ou des courants d'eau propulsés provenant dudit au moins un autre logement (64).

10. Procédé selon la revendication 9, dans lequel les deux logements (64) sont déplacés en pivotement de telle sorte que les courants d'eau respectifs convergent ou de telle sorte que les courants d'eau respectifs divergent.

11. Procédé selon la revendication 10, dans lequel au moins un logement (64) est déplacé en pivotement par rapport à au moins un autre logement (64) de telle sorte que les courants d'eau respectifs propulsés qui en proviennent soient opposés, ne produisant ainsi substantiellement aucune propulsion résultante et maintenant le navire dans une position substantiellement stationnaire.

12. Appareil de propulsion (10) pour un navire transportant du gaz à l'état liquide, l'appareil (10) comportant au moins un groupe générateur (40), et un moyen de propulsion (60), le groupe générateur (40) étant utilisable pour générer en sortie de l'électricité à partir d'un combustible qu'il brûle, ce combustible comprenant le gaz, et le moyen de propulsion (60) étant adapté pour recevoir l'électricité en entrée,
**caractérisé en ce que** le moyen de propulsion (60) peut être utilisé pour propulser au moins deux courants d'eau dirigés à l'écart du navire, propulsant ainsi le navire, le moyen de propulsion (60) étant en outre utilisable pour changer la direction de deux des courants d'eau par rapport au navire, orientant ainsi le navire, dans lequel le moyen de propulsion (60) peut en outre être utilisé pour changer la direction d'au moins l'un des courants d'eau par rapport à au moins un autre des courants d'eau de façon à s'opposer au moins partiellement à l'action dudit au moins un autre courant d'eau.

13. Appareil de propulsion (10) selon la revendication 12, dans lequel le moyen de propulsion (60) comporte une ou plusieurs unités à moteur électrique, chacune comprenant un moteur électrique (66) associé à et utilisable pour mettre en rotation au moins un moyen de propulsion respectif (68) et pour produire ainsi lesdits au moins deux courants d'eau.

14. Appareil de propulsion (10) selon la revendication 13, dans lequel les unités à moteur électrique (60) sont montées hors-bord du navire et dans lequel chaque moyen de propulsion (68) est un propulseur conventionnel.

15. Appareil de propulsion (10) selon la revendication 13, dans lequel le moyen de propulsion (60) est monté à bord du navire de façon à propulser des courants d'eau sous la forme de jets d'eau depuis le navire.

16. Appareil de propulsion (10) selon la revendication 14, dans lequel il y a au moins deux propulseurs (68) et dans lequel chaque propulseur est relié de façon à pouvoir être mis en rotation par respectivement l'un des moteurs (66).

17. Appareil de propulsion (10) selon la revendication 14, dans lequel chaque unité à moteur électrique (60) comprend un logement respectif (64) dans lequel le moteur respectif (66) est logé, sur lequel est monté le propulseur respectif (68) pour être mis en rotation.

18. Appareil de propulsion (10) selon la revendication 17, dans lequel chaque logement (64), pris avec le propulseur respectif (68), peut être pivoté par rapport au navire de telle sorte que le mouvement de pivotement de chaque logement (64) par rapport au navire provoque un changement de la direction par rapport au navire du courant d'eau respectif ainsi produit.

19. Appareil de propulsion (10) selon la revendication 18, dans lequel chaque logement (64) peut être pivoté autour d'un axe sensiblement vertical.

20. Appareil de propulsion (10) selon la revendication 17, la revendication 18 ou la revendication 19, dans lequel le moyen de propulsion (60) comprend un moyen de commande utilisable pour déplacer en pivotement au moins un logement (64) indépendamment de, et en opposition au moins partielle avec, au moins un autre logement (64), de telle sorte que le ou les courants d'eau propulsés provenant dudit au moins un logement (64) est ou sont propulsés selon une direction autre que parallèle à la direction du ou des courants d'eau propulsés provenant dudit au moins un autre logement (64).

21. Appareil de propulsion (10) selon la revendication 20, dans lequel les deux logements (64) sont déplacés en pivotement de telle sorte que les courants d'eau respectifs convergent ou de telle sorte que les courants d'eau respectifs divergent.

22. Appareil de propulsion (10) selon la revendication 21, dans lequel au moins un logement (64) est déplacé en pivotement par rapport à au moins un autre logement (64) de telle sorte que les courants d'eau respectifs propulsés qui en proviennent soient opposés, ne produisant ainsi substantiellement aucune propulsion résultante et maintenant le navire dans une position substantiellement stationnaire.

23. Procédé ou appareil de propulsion (10) selon l'une quelconque des revendications précédentes, dans lequel le navire est un navire pour transporter du gaz naturel liquéfié (LNG).

24. Procédé ou appareil de propulsion (10) selon la revendication 23, dans lequel le gaz est du gaz naturel liquéfié qui est transporté par le navire.

25. Procédé ou appareil de propulsion (10) selon la revendication 24, dans lequel le gaz est un vaporisat de gaz du gaz naturel liquéfié qui est transporté par le navire.

26. Procédé ou appareil de propulsion (10) selon la revendication 25, dans lequel le ou chaque groupe générateur (40) comprend au moins un moteur qui peut être utilisé pour brûler l'un et l'autre d'un combustible diesel conventionnel et du vaporisat de gaz naturel liquéfié.
